Europäisches Patentamt

European Patent Office

Office européen des brevets

(19)

(11) Numéro de publication : **0 157 676**
**B1**

(12) **FASCICULE DE BREVET EUROPÉEN**

(45) Date de publication du fascicule du brevet :
06.07.88

(51) Int. Cl.⁴ : **G 02 B 23/08**

(21) Numéro de dépôt : **85400436.3**

(22) Date de dépôt : **07.03.85**

(54) **Dispositif d'observation à travers une paroi dans deux directions opposées.**

(30) Priorité : 27.03.84 FR 8404707

(43) Date de publication de la demande :
09.10.85 Bulletin 85/41

(45) Mention de la délivrance du brevet :
06.07.88 Bulletin 88/27

(84) Etats contractants désignés :
**DE GB**

(56) Documents cités :
BE-A- 407 679
BE-A- 644 359
FR-A- 2 496 905

(73) Titulaire : **ETAT-FRANCAIS représenté par le DELE-
GUE GENERAL POUR L'ARMEMENT (DPAG)
Bureau des Brevets et Inventions de la Délégation
Générale pour l'Armement 26, Boulevard Victor
F-75996 Paris Armées (FR)**

(72) Inventeur : **Herbez, Jean-Pierre
12 cours de Provence
F-78450 Villepreux (FR)**
Inventeur : **Laisney, Michel
9 rue de la Plaine
F-78470 Cressely (FR)**
Inventeur : **Murat, Jacques
40 rue de Chameyrat
F-19000 Tulle (FR)**
Inventeur : **Serpeau, Patrick
27 rue des Ecoles
F-94000 Créteil (FR)**

EP 0 157 676 B1

## Description

Le secteur technique de la présente invention est celui des dispositifs d'observation permettant à un observateur placé à l'extérieur d'un véhicule de regarder le paysage extérieur.

Il est bien connu d'équiper des véhicules blindés de dispositifs permettant au personnel de voir à l'extérieur. Ces dispositifs, dits épiscopes, sont constitués par un boîtier étanche renfermant un bloc optique comprenant un ou plusieurs prismes dont le rôle est de transmettre les rayons lumineux vers une fenêtre de sortie selon un cheminement optique comportant un nombre pair de réflexions. Des épiscopes de ce type sont décrits dans les brevets FR-A-2 365 137 et 2 496 905. Ces épiscopes sont montés de façon à permettre la vision dans une seule direction. Il en résulte que l'observateur est obligé de passer d'un épiscope à l'autre s'il veut pouvoir regarder dans deux directions opposées. De plus, en raison de l'encombrement de l'intérieur du véhicule, l'observateur est obligé de se retourner, ce qui rend pénible l'utilisation de l'épiscope arrière.

La présente invention vise à remédier à cet inconvénient en proposant un dispositif d'observation permettant de regarder un paysage dans deux directions opposées et ce, sans être obligé de se retourner pour passer d'une direction d'observation à l'autre.

L'invention a donc pour objet un dispositif d'observation à travers une paroi d'un véhicule blindé, constitué d'un bloc optique médian ayant notamment quatre faces parallèles deux à deux pour renvoyer un premier faisceau lumineux tombant sur une fenêtre d'entrée vers une fenêtre de sortie et assurer ainsi la vision du paysage extérieur dans une première direction, par réflexion du faisceau lumineux sur au moins deux faces parallèles, l'une supérieure et l'autre inférieure, caractérisé en ce qu'il comprend au moins un bloc optique supérieur coopérant avec le bloc médian au niveau de sa face supérieure par transmission d'un second faisceau lumineux issu d'une seconde direction, opposée à la première, pour assurer son cheminement vers une fenêtre de sortie avec au moins une réflexion dans le bloc supérieur.

De préférence, les blocs optiques supérieur et médian sont séparés par une lame d'air.

Favorablement, l'angle d'inclination du premier faisceau lumineux en bord de champ total inférieur par rapport à une perpendiculaire à la face supérieure du bloc médian est supérieur ou égal à l'angle limite de réflexion totale.

De préférence, le second faisceau lumineux réfléchi par le bloc optique supérieur tombe sur sa face inférieure selon un angle d'incidence inférieur à l'angle limite de réflexion totale, puis sur la face supérieure du bloc optique médian.

Favorablement, le cheminement du second faisceau est assuré par réflexion dans le bloc optique médian, le nombre total de réflexions dans les blocs optiques étant impair et supérieur ou égal à trois, le premier et le second faisceau émergeant ensemble au niveau d'une fenêtre de sortie unique ou séparément au niveau de deux fenêtres de sortie distinctes.

Favorablement, le cheminement du second faisceau est assuré par transmission à travers le bloc optique médian et par réflexion dans un bloc optique inférieur disposé au voisinage de la face inférieure du bloc optique médian, vers une seconde fenêtre de sortie distincte d'une première fenêtre de sortie destinée au premier faisceau, le nombre total de réflexions dans les blocs optiques étant impair et supérieur ou égal à trois.

De préférence, le second faisceau subit une réflexion dans le bloc supérieur et deux réflexions sur deux faces contiguës du bloc optique médian avant émergence.

Le cas échéant, le second faisceau subit deux réflexions successives dans le bloc supérieur et une réflexion dans le bloc médian avant émergence.

Favorablement, le bloc optique supérieur comprend deux prismes adjacents, le premier assurant la transmission du second faisceau lumineux vers le second assurant deux réflexions dudit faisceau sur deux de ses faces concourantes.

De préférence, les trois blocs optiques sont séparés par des lames d'air.

Favorablement, le second faisceau subit deux réflexions dans le bloc optique supérieur et une réflexion dans le bloc optique inférieur.

Le cas échéant, le second faisceau subit une réflexion dans le bloc optique supérieur et deux réflexions dans le bloc optique inférieur.

De préférence, la face d'entrée du bloc optique supérieur présente une inclinaison négative d'environ 10° par rapport à la verticale.

Favorablement, les faces des différents blocs optiques assurant uniquement la réflexion sont munies d'une couche réfléchissante tel l'argent, l'aluminium.

Favorablement, le dispositif comprend au moins une lame de protection laser disposée sur le trajet des faisceaux lumineux.

Un avantage de la présente invention réside dans le fait que l'observateur peut regarder vers l'avant ou vers l'arrière de son poste sans changer de position.

Un autre avantage réside dans le fait que l'architecture interne du véhicule peut être modifiée en raison de la suppression de certains épiscopes.

Un autre avantage réside dans le fait que cette observation peut être effectuée soit à partir d'une fenêtre de sortie unique soit à partir de deux fenêtres de sortie distinctes.

L'invention met donc en œuvre un bloc optique médian classique et pour plus de précision on pourra se référer aux brevets français précités. Dans ce bloc, les rayons lumineux tombant sur la fenêtre d'entrée peuvent subir deux, quatre ou six réflexions avant émergence. Les dimensions de ce bloc sont quelconques et certaines faces peuvent être traitées pour assurer la réflexion. L'angle au sommet peut être également quelconque sauf à respecter les conditions de réflexion totale du faisceau incident venant de la première direction. En effet, l'invention fait application du principe connu de la réflexion ou de la transmission d'un rayon lumineux sur un dioptre. Ainsi, dans les exemples concrets de réalisation suivants, qui illustrent l'invention, la face supérieure du bloc optique médian est inclinée par rapport aux rayons lumineux venant de la première direction de telle sorte que leur inclinaison soit supérieure à l'angle limite de réflexion totale défini par la relation $\alpha$ (lim.) = Arc (sin I/n), n étant l'indice de réfraction du bloc optique.

Les rayons lumineux venant de la seconde direction, opposée à la première, sont réfléchis par le bloc optique supérieur vers le bloc médian, les deux blocs coopérant par transmission au niveau de leurs faces adjacentes. Les rayons lumineux venant de la seconde direction et tombant sur la face inférieure du bloc supérieur doivent avoir une incidence inférieure à l'angle limite de réflexion totale défini précédemment pour qu'ils soient transmis au bloc optique médian. Le cheminement de ces rayons peut être obtenu soit par réflexion soit par transmission dans le bloc optique médian. Dans les deux cas, le nombre total de réflexions de ces rayons lumineux doit être impair afin d'obtenir au niveau de la fenêtre de sortie une image droite. Ce nombre est obligatoirement supérieur ou égal à trois. Pour des raisons de commodité, on se limitera à trois réflexions. Ainsi, lorsque le cheminement des rayons venant de la seconde direction est assurée par réflexion dans le bloc optique médian, on peut réaliser soit une réflexion dans le bloc optique supérieur et deux réflexions dans le bloc optique médian, soit deux réflexions dans le bloc optique supérieur et une réflexion dans le bloc optique médian. Par contre, lorsque le cheminement de ces rayons est assuré par transmission à travers le bloc optique médian, on prévoit un bloc optique inférieur et on pourra donc obtenir, soit une réflexion dans le bloc optique supérieur et deux réflexions successives dans le bloc optique inférieur, soit l'inverse.

Les figures 1A et 1B illustrent un exemple de réalisation dans lequel on utilise deux blocs optiques ;

Les figures 2A et 2B illustrent un mode de réalisation à trois bloc optiques.

La figure 3 illustre un autre mode de réalisation comprenant trois blocs optiques.

La figure 4 illustre un autre mode de réalisation comprenant deux blocs optiques.

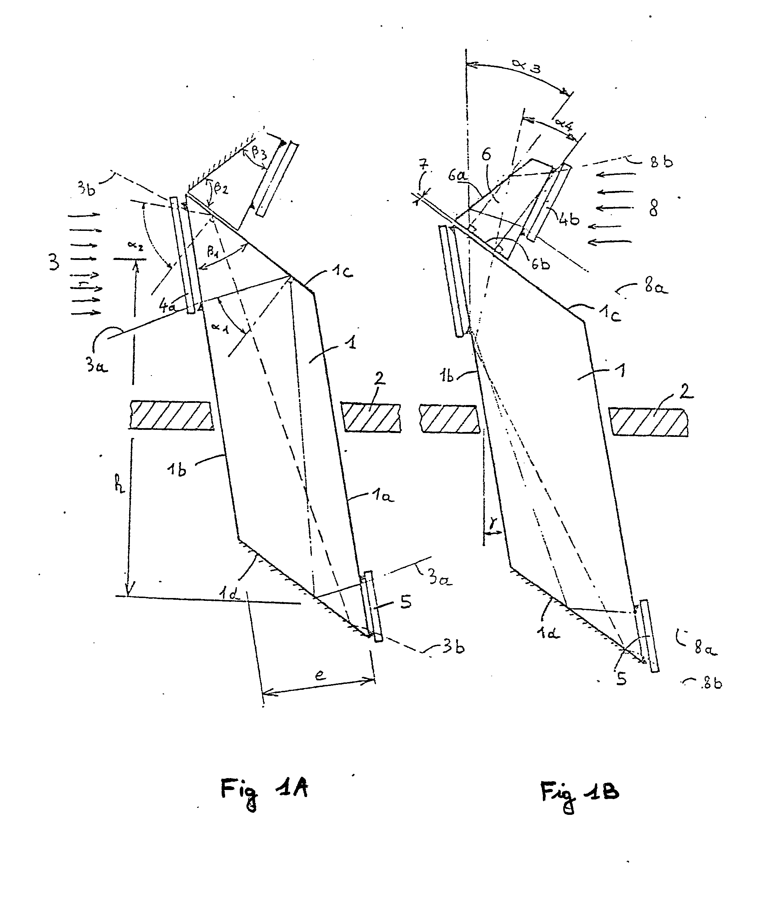

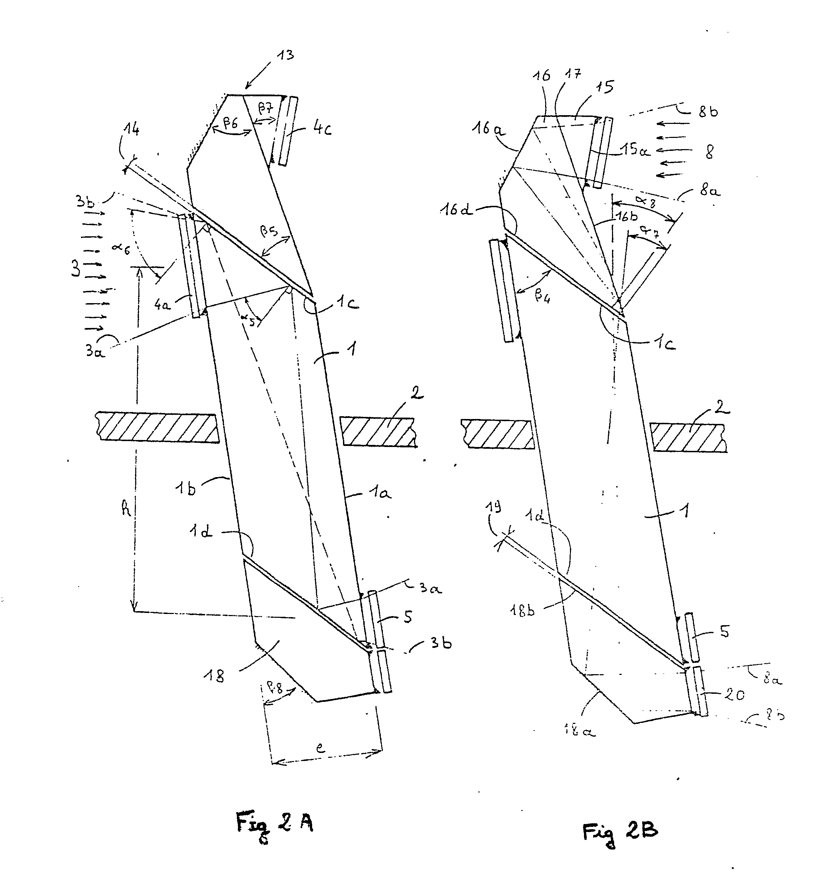

Par commodité, on a représenté sur la fig. 1A uniquement le faisceau lumineux venant d'une première direction, tandis que sur la fig. 1B le faisceau venant d'une direction opposée à la première ; ces deux figures représentent un mode unique de réalisation. Il en est de même des fig. 2A et 2B.

Sur les fig. 1A et 1B, on a représenté un dispositif optique dans lequel les rayons lumineux venant de la seconde direction subissent une réflexion dans le bloc optique supérieur et deux réflexions dans le bloc optique médian. Il comporte un bloc optique 1, monté sur une paroi 2 d'un véhicule blindé transmettant les rayons lumineux 3 venant d'une première direction, par exemple de l'avant, depuis une fenêtre d'entrée 4a externe jusqu'à une fenêtre de sortie 5 interne. Ce bloc optique est constitué d'un seul prisme comprenant quatre faces (1a, 1b, 1c, 1d) parallèles deux à deux et les deux faces parallèles 1c, 1d sont inclinées par rapport aux deux autres. Mais, il peut être constitué de deux prismes dont les faces adjacentes sont parallèles et séparées de façon connue par une lame de protection laser disposée sur le trajet des rayons lumineux. Les rayons 3 subissent deux réflexions successives à l'intérieur du bloc 1 sur les faces 1c et 1d. Celles-ci étant parallèles, les rayons 3 seront totalement réfléchis par la face 1c lorsque l'inclinaison $\alpha_1$ du rayon 3a en bord de champ total inférieur et l'inclinaison $\alpha_2$ du rayon 3b en bord de champ total supérieur sont supérieures à l'angle limite. Ce dernier est de 42° environ lorsque les blocs optiques sont en verre. Pour des raisons de discrétion vis-à-vis d'un observateur extérieur au regard des réflexions parasites sur les différents dioptres le bloc 1 est incliné d'un angle $\gamma$ de 10° par rapport à la verticale. A titre d'exemple le bloc 1 présente un angle au sommet $\beta_1$ de 45°, une hauteur épiscopique h de 295 mm, une épaisseur e de 90 mm. Avec une fenêtre d'entrée de 63 mm, le champ total de vision vers l'avant est de 25° environ.

Sur la figure 1B, on a représenté le champ total selon la seconde direction. Pour cela, au-dessus de la face 1c, on fixe un bloc optique 6 constitué d'un prisme unique et séparé du bloc 1 par une lame d'air 7 d'épaisseur quelconque. Le rôle de cette lame est de créer une variation d'indice de réfraction nécessaire pour assurer la réflexion totale des rayons 3 venant de la première direction. Par commodité, les faces adjacentes 1c et 6b sont parallèles entre elles. Le bloc 6 reçoit les rayons lumineux 8 venant d'une direction opposée à la première, par exemple de l'arrière à travers la fenêtre 4b et ceux-ci sont réfléchis par la face 6a vers le bloc 1. L'angle des faces 6a et 6b du prisme 6 est prévu de telle façon que les rayons 8 réfléchis par la face 6a aient une incidence $\alpha$ inférieure à l'angle limite pour que la transmission à travers les faces 6b et 1c soit possible. Il en est ainsi lorsque l'incidence $\alpha_3$ du rayon 8a en bord de champ total inférieur et l'incidence $\alpha$ du rayon 8b en bord de champ total supérieur sont inférieures à l'angle limite $\alpha$ (lim.). Les rayons 8 subissent une réflexion sur la face 1b et sur la face 1d du bloc 1 puis sortent au niveau de la fenêtre 5. Pour assurer la réflexion des rayons 8, la face 6a est traitée par un dépôt réfléchissant tel l'argent ou l'aluminium ; les faces 1b et 1d peuvent l'être également. On voit que la fenêtre 5 est commune aux rayons lumineux 3 venant de la première direction, par exemple de l'avant, et aux rayons lumineux 8 venant de la seconde direction, par exemple de l'arrière. La différenciation s'opère par l'inclinaison des rayons lumineux. Les rayons 3 restent parallèles à eux-mêmes à l'émergence, tandis que les rayons 8 possèdent une émergence négative. Par commodité, la vision vers l'avant se fera en conservant l'œil au centre de la fenêtre de sortie, tandis que la vision vers l'arrière nécessitera un léger basculement de la tête, l'œil étant orienté vers le haut.

A titre indicatif, l'angle $\beta_2$ peut être de 71° et $\beta_3$ de 26° ; avec une fenêtre 4b de 47 mm le champ total de la voie arrière est d'environ 15°.

Sur les fig. 2A et 2B, on a représenté un dispositif optique à deux réflexions dans le bloc optique supérieur et une réflexion dans le bloc optique inférieur. Le bloc optique médian 1 peut être modifié dans ses dimensions tout en conservant les conditions d'inclinaison $\alpha5$ et $\alpha6$ des rayons en bord de champ total inférieur et supérieur. Ainsi, sa hauteur épiscopique h peut être de 343 mm, son épaisseur e de 75 mm et son angle au sommet $\beta_4$ de 43° environ. Avec une fenêtre d'entrée 4a de 60 mm et une fenêtre de sortie 5 de 30 mm, on obtient un champ de vision vers l'avant de 22°.

Au niveau de la face supérieure 1c du bloc 1 est prévu un bloc optique supérieur 13, séparés par une lame d'air 14, d'épaisseur quelconque. Le bloc 13 comprend deux prismes 15 et 16 séparés ou non par une lame d'air 17. Le prisme 15 reçoit les rayons lumineux 8 venant de la seconde direction par exemple l'arrière et sa face d'entrée 15a présente une incidence négative de 10° environ par rapport à la verticale ; il transmet le faisceau lumineux au prisme 16 dont les faces 16a et 16b coopèrent pour assurer deux réflexions des rayons 8 et leur transmission vers le bloc 1. L'inclinaison des faces 16a et 16b est prévue de telle façon que les rayons réfléchis par la face 16b vers la face 16d aient une incidence inférieure à l'angle limite pour que la transmission à travers les faces 16d et 1c soit possible. Il en est ainsi lorsque les angles d'inclinaison $\alpha_7$ et $\alpha_8$ des rayons lumineux en bord de champ total inférieur 8a et en bord de champ total supérieur 8b sont inférieurs à l'angle limite de réflexion totale $\alpha$ (lim.).

Les rayons 8 traversent sans réflexion le bloc 1 et sont repris par un bloc optique inférieur 18 placé au niveau de la face inférieure 1d du bloc 1 duquel il est séparé par une lame d'air 19. Ce bloc optique comprend notamment une face 18a, éventuellement traitée, pour réfléchir le rayon 8 vers une fenêtre de sortie 20 distincte de la fenêtre 5.

Le prisme 18 permet de séparer totalement les faisceaux avant et arrière. Ainsi, les deux faisceaux lumineux sont séparés physiquement et l'observateur dispose de deux fenêtres de sortie pour regarder dans chacune des deux directions opposées.

A titre indicatif, les angles $\beta5$, $\beta6$, $\beta7$ et $\beta8$ peuvent avoir les valeurs respectives suivantes : 33°, 46°, 30° et 34°. Avec une fenêtre d'entrée 4c de l'ordre de 40 mm et une fenêtre de sortie 20 de 26 mm de champ total de la voie arrière est de 11°.

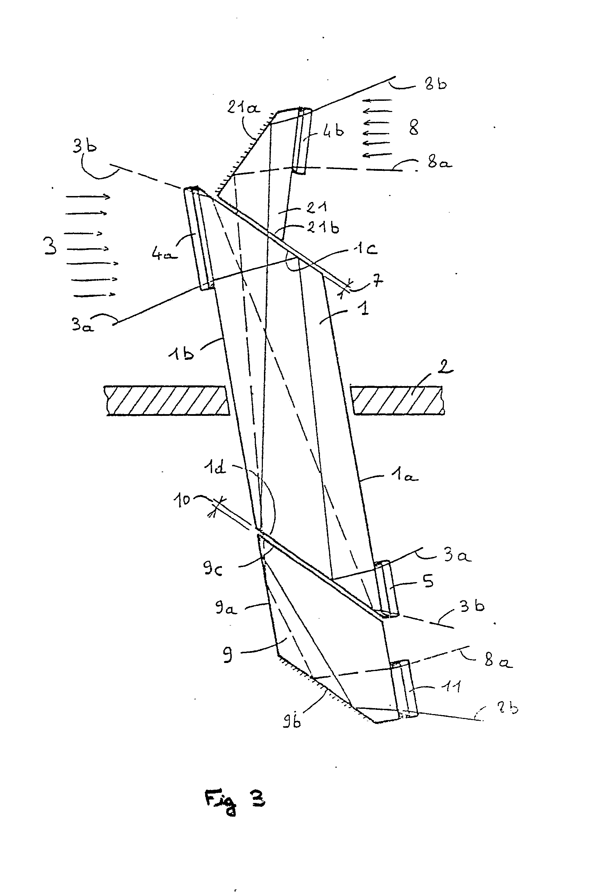

Sur la fig. 3 on a représenté un mode de réalisation dans lequel le dispositif comporte trois blocs optiques. La vision selon la première direction, par exemple l'avant, reste identique aux deux cas précédents et se fait par l'intermédiaire du bloc 1. La vision selon la seconde direction met tout d'abord en œuvre un bloc optique supérieur 21 séparé du bloc optique médian par une lame d'air 7 d'épaisseur quelconque. Les rayons 8 venant de la direction opposée à la première, par exemple de l'arrière, subissent une réflexion dans le bloc optique supérieur 21 sur la face 21a, traversent sans réflexion les faces adjacentes 21b et 1c des blocs optiques 21 et 1 et sont transmis au bloc optique 9. La face 21a est inclinée par rapport à la face 21b de telle façon que l'incidence des rayons 8 sur la face 21b soit inférieure à l'angle limite $\alpha$ (lim.). Le bloc 1 est séparé du bloc 9 par une lame d'air 10 au niveau de leurs faces adjacentes 1d et 9c. La face 1d étant parallèle à la face 1c, la condition de transmission des rayons 8 est respectée et ces rayons sortent au niveau de la fenêtre 11 distincte de la fenêtre 5 après deux réflexions successives sur les faces 9a et 9b éventuellement traitées. Les rayons 8 subissent donc une réflexion dans le bloc supérieur et deux réflexions dans le bloc optique inférieur.

A titre indicatif, les dimensions du bloc optique 1 peuvent être identiques à celles données en relation avec les figures 1A et 1B.

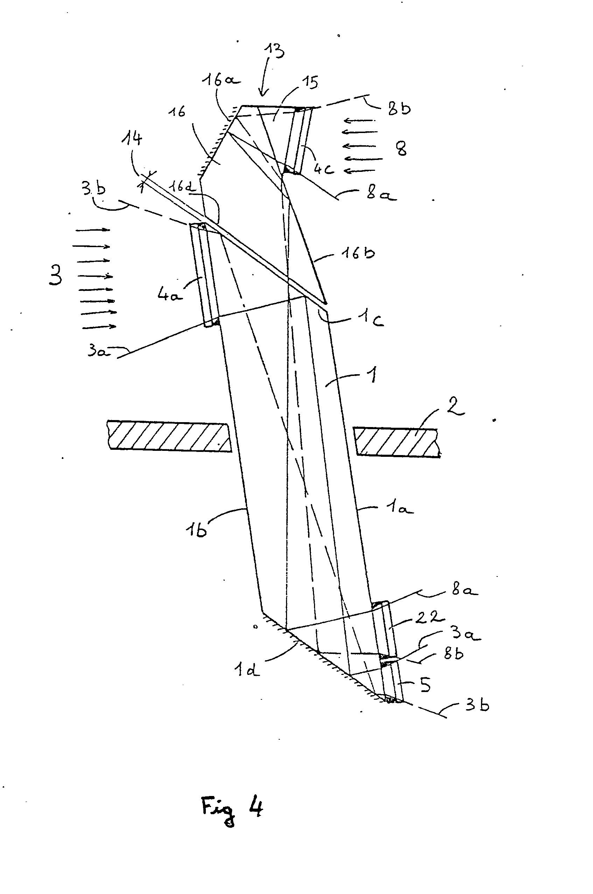

Sur la figure 4, on a représenté un mode de réalisation dans lequel le dispositif comporte deux blocs optiques. La vision selon la première direction reste également identique aux cas précédents et se fait par l'intermédiaire du bloc optique 1. Les rayons venant de la seconde direction, par exemple l'arrière, subissent deux réflexions successives dans le bloc optique supérieur 13 constitué de deux prismes 15 et 16 et une réflexion dans le bloc médian 1. Le bloc optique 13 est disposé par rapport au bloc 1 de la même manière que sur les figures 2A et 2B. Le bloc 1 peut comporter un dépôt réfléchissant sur sa face inférieure 1d de façon à réfléchir totalement les rayons 8. Ceux-ci sortent par une fenêtre 22 distincte de la fenêtre 5.

## Revendications

1. Dispositif optique d'observation à travers une paroi (2) d'un véhicule blindé, constitué d'un bloc optique médian (1) ayant notamment quatre faces (1a, 1b, 1c, 1d) parallèles deux à deux pour renvoyer un premier faisceau lumineux (3) tombant sur une fenêtre d'entrée (4a) vers une fenêtre de sortie (5) et assurer ainsi la vision du paysage extérieur dans une première direction, par réflexion du faisceau lumineux sur au moins deux faces parallèles (1c, 1d), l'une supérieure (1c) et l'autre inférieure (1d), caractérisé en ce qu'il comprend au moins un bloc optique supérieur (6, 13, 21) coopérant avec le bloc médian au niveau de sa face supérieure (1c) par transmission d'un second faisceau lumineux (8) issu d'une seconde direction, opposée à la première, pour assurer son cheminement vers une fenêtre de sortie (5, 11, 20, 22) avec au moins une réflexion dans le bloc supérieur (6, 13, 21).

2. Dispositif optique selon la revendication 1, caractérisé en ce que les blocs optiques supérieur et médian (1, 6, 13, 21) sont séparés par une lame d'air (7, 14).

3. Dispositif optique selon la revendication 2, caractérisé en ce que l'angle d'inclination du premier faisceau lumineux en bord de champ total inférieur (3a) par rapport à une perpendiculaire à la face supérieure (1c) du bloc médian est supérieur ou égal à l'angle limite de réflexion totale.

4. Dispositif optique selon la revendication 2 ou 3, caractérisé en ce que le second faisceau lumineux (8) réfléchi par le bloc optique supérieur (6, 13, 21) tombe sur sa face inférieure (6b, 16d, 21b) selon un angle d'incidence inférieur à l'angle limite de réflexion totale, puis sur la face supérieure (1c) du bloc optique médian (1).

5. Dispositif optique selon l'une quelconque des revendications 1 à 4, caractérisé en ce que le cheminement du second faisceau (8) est assuré par réflexion dans le bloc optique médian (1), le nombre total de réflexions dans les blocs optiques étant impair et supérieur ou égal à trois, le premier et le second faisceaux (3, 8) émergeant ensemble au niveau d'une fenêtre de sortie unique (5) ou séparément au niveau de deux fenêtres de sortie distinctes (5, 11, 20, 22).

6. Dispositif optique selon l'une quelconque des revendications 1 à 4, caractérisé en ce que le cheminement du second faisceau (8) est assuré par transmission à travers le bloc optique médian (1) et par réflexion dans un bloc optique inférieur (9, 18) disposé au voisinage de la face inférieure (2d) du bloc optique médian, vers une seconde fenêtre de sortie (11, 20) distincte d'une première fenêtre de sortie (5) destinée au premier faisceau (3), le nombre total de réflexions dans les blocs optiques étant impair et supérieur ou égal à trois.

7. Dispositif optique selon la revendication 5, caractérisé en ce que le second faisceau (8) subit une réflexion dans le bloc supérieur (6) et deux réflexions sur deux faces contiguës (1b, 1d) du bloc optique médian avec émergence.

8. Dispositif optique la revendication 5, caractérisé en ce que le second faisceau (8) subit deux réflexions successives dans le bloc supérieur et une réflexion dans le bloc médian (1) avant émergence.

9. Dispositif optique selon la revendication 8, caractérisé en ce que le bloc optique supérieur comprend deux prismes adjacents (15, 16), le premier (15) assurant la transmission du second faisceau vers le second (16) assurant deux réflexions dudit faisceau sur deux de ses faces concourantes (16a, 16b).

10. Dispositif optique selon la revendication 6, caractérisé en ce que les trois blocs optiques sont séparés par des lames d'air.

11. Dispositif optique selon la revendication 6 ou 10, caractérisé en ce que le second faisceau (8) subit deux réflexions dans le bloc optique supérieur (13) et une réflexion dans le bloc optique inférieur (18).

12. Dispositif optique selon la revendication 6 ou 10, caractérisé en ce que le second faisceau (8) subit une réflexion dans le bloc optique supérieur (21) et deux réflexions dans le bloc optique inférieur (9).

13. Dispositif optique selon l'une quelconque des revendications 1 à 12, caractérisé en ce que la face d'entrée du bloc optique supérieur (6, 13, 21) présente une inclinaison négative d'environ 10° par rapport à la verticale.

14. Dispositif optique selon l'une quelconque des revendications 1 à 13, caractérisé en ce que les faces des différents blocs optiques assurant uniquement la réflexion sont munies d'une couche réfléchissante tel l'argent, l'aluminium.

15. Dispositif optique selon l'une quelconque des revendications 1 à 14, caractérisé en ce qu'il comprend au moins une lame de protection laser disposée sur le trajet des faisceaux lumineux (3, 8).

**Claims**

1. An optical device for observing through a wall (2) of an armoured vehicle, comprising a median optical unit (1) having more especially four faces (1a, 1b, 1c, 1d) formed of two pairs parallel to each other so as to reflect a first light beam (3) falling on an input window (4a) towards an output window (5) thus enabling the external landscape to be viewed in a first direction, by reflection of the light beam on at least two parallel faces (1c, 1d) consisting of on upper face (1c) and one lower face (1d), characterized in that it includes at least one upper optical unit (6, 13, 21) cooperating with the median unit at the location of its upper face (1c) by transmitting a second light beam (8) coming from a second direction, opposite to the first direction, so as to direct it towards an output window (5, 11, 20, 22) with at least one reflection in the upper unit (6, 13, 21).

2. An optical device as claimed in claim 1, characterized in that the upper and median optical units (1, 6, 13, 21) are separated by an air knife (7, 14).

3. An optical device as claimed in claim 2, characterized in that the angle of inclination of the first light beam at the edge of the whole lower field (3a) from a perpendicular to the upper face (1c) of the median unit is greater than or equal to the limit angle of total reflection.

4. An optical device as claimed in claim 2 or 3, characterized in that the second light beam (8) reflected by the upper optical unit (6, 13, 21) falls on its lower face (6b, 16d, 21b) at an angle of incidence smaller than the limit angle of total reflection, and then on the upper face (1c) of the median optical unit (1).

5. An optical device as claimed in any of claims 1 through 4, characterized in that the path of the second light beam (8) is directed by reflection in the median optical unit (1) the total number of reflections in the optical units being and odd number greater than or equal to three, the first and second light beams (3, 8) emerging together at the location of a single output window (5) or separately at the location of two distinct output windows (5, 11, 20, 22).

6. An optical device as claimed in any of claims 1 through 4, characterized in that the path of the second light beam (8) is directed by transmission through the median optical unit (1) and by reflection in the lower optical unit (9, 18) located in the vicinity of the lower face (2d) of the median optical unit, towards a second output window (5) intended for the first light beam (3), the total number of reflections in the optical units being and odd number greater than or equal to three.

7. An optical device as claimed in claim 5, characterized in that the second light beam (8) undergoes one reflection in the upper unit (6) and two reflections on two contiguous faces (1b, 1d) of the median optical unit before emerging.

8. An optical device as claimed in claim 5, characterized in that the second light beam (8) undergoes two successive reflections in the upper unit and one reflection in the median unit (1) before emerging.

9. An optical device as claimed in claim 8, characterized in that the upper optical unit comprises two adjacent prisms (15, 16), the first prism (15) ensuring the transmission towards the second prism (16) ensuring two reflections of said light beam on two of its concurrent faces (16a, 16b).

10. An optical device as claimed in claim 6, characterised in that the three optical units are separated by air knives.

11. An optical device as claimed in claim 6 or 10, characterized in that the second light beam (8) undergoes two reflections in the upper optical unit (13) and one reflection in the lower optical unit (18).

12. An optical device as claimed in claim 6 and 10, characterized in that the second light beam (8) undergoes one reflection in the upper optical unit (21) and two reflections in the lower optical unit (9).

13. An optical device as claimed in any of claims 1 through 12, characterized in that the input face of the upper optical unit (6, 13, 21) has a negative inclination of about 10° from the vertical.

14. An optical device as claimed in any of claims 1 through 13, characterized in that the faces of the different optical units ensuring only the light beam reflection are coated with a reflecting layer such as silver or aluminium.

15. An optical device as claimed in any of claims 1 through 14, characterized in that it includes at least one laser protecting blade located in the path of the light beams (3, 8).

**Patentansprüche**

1. Optische Vorrichtung für die Beobachtung durch die Wandung (2) eines Panzerfahrzeuges, bestehend aus einem mittleren optischen Block (1) mit u.a. vier parallelen, je zu zwei gegenüberliegenden Flächen (1a, 1c, 1d), um die Rückspiegelung eines ersten, auf ein Eintrittsfenster (4a) einfallenden Lichtstrahles (3) in Richtung eines Austrittsfensters (5) zu bewirken und somit die Sicht einer Landschaft aus einer ersten Richtung über Spiegelung des Lichtstrahles auf mindestens zwei parallelen Flächen (1c, 1d), zwar einer oberen (1c) und einer unteren (1d), zu gewähren, dadurch gekennzeichnet, daß sie mindestens einen oberen optischen Block (6, 13, 21) aufweist, der mit dem mittleren Block auf Höhe dessen oberen Fläche (1c) mit der Uebertragung eines, aus einer anderen gegenüberliegenden Richtung einfallenden, zweiten Lichtstrahles (8) mitwirkt, um dessen Fluß in Richtung eines Austrittsfensters (5, 11, 20, 22) mit mindestens einer Spiegelung im oberen Block (6, 13, 21) zu lenken.

2. Optische Vorrichtung nach Anpruch 1, dadurch gekennzeichnet, daß die beiden oberen bzw. mittleren optischen Blöcke (1, 6, 13, 21) durch einen Luftspalt getrennt sind.

3. Optische Vorrichtung nach Anspruch 2, dadurch gekennzeichnet, daß der Neigungswinkel des ersten Lichtstrahles am unteren Rand (3a) des Gesambildfeldes gegenüber dem Lot zur oberen Fläche (1c) des mittleren Teils einen Wert aufweist, der grösser als oder gleich dem Gesamtrückstrahlungs-Grenzwinkel ist.

4. Optische Vorrichtung nach Anspruch 2 oder 3, dadurch gekennzeichnet, daß der zweite, durch den oberen optischen Block (6, 13, 21) rückgespiegelte Lichtstrahl (8) auf dessen untere Fläche (6b, 16d, 21b) mit einem kleineren Winkel als der Gesamtrückstrahlungs-Grenzwinkel und anschließend auf die obere Fläche (1c) des mittleren optischen Blockes (1) einfällt.

5. Optische Vorrichtung nach einem beliebigen Anspruch 1 bis 4, dadurch gekennzeichnet, daß der Fluß des zweiten Lichtstrahles (8) durch Widerspiegelung im mittleren optischen Block (1) fortgepflanzt wird, wobei die Gesamtzahl der Spiegelungen in den optischen Blöcken eine ungerade Zahl darstellt und grösser oder gleich 3 ist, und wobei der erste und der zweite Lichtstrahl gemeinsam auf Höhe eines einzigen Austrittsfensters (5) oder getrennt über zwei verschiedene Austrittsfenster (5, 11, 20, 22) austreten.

6. Optische Vorrichtung nach einem beliebigen Anspruch 1 bis 4, dadurch gekennzeichnet, daß der Fluß des zweiten Lichtstrahles (8) durch Uebertragung im mittleren optischen Block (1) und durch Spiegelung in einem in der Nähe der unteren Fläche (2d) des mittleren Blockes angeordneten, unteren optischen Block zu einem zweiten, vom ersten Austriffsfenster (5) für den ersten Lichtstrahl (3) getrennten Austrittsfenster (11, 20) fortgepflanzt wird, wobei die Gesamtzahl der Spiegelungen in den optischen Blöcken eine ungerade Zahl darstellt und grösser oder gleich 3 ist.

7. Optische Vorrichtung nach Anspruch 5, dadurch gekennzeichnet, daß der zweite Lichtstrahl (8) eine Spiegelung im oberen optischen Block (6) und zwei Spiegelungen auf nebeneinander liegenden Flächen (1b, 1d) des mittleren optischen Blockes vor dem Austreten erfährt.

8. Optische Vorrichtung nach Anspruch 5, dadurch gekennzeichnet, daß der zweite Lichtstrahl (8) zwei aufeinanderfolgende Spiegelungen im oberen Block und eine Spiegelegung im mittleren Block (1) vor dem Austreten erfährt.

9. Optische Vorrichtung nach Anspruch 8, dadurch gekennzeichnet, daß der obere optische Block aus zwei aneinanderliegenden Prismen (15, 16) besteht, wobei das erste Prisma (15) die Uebertragung des zweiten Lichtstrahles zum zweiten Prisma (16) einleitet, der anschließend eine doppelte Spiegelung des einfallenden Lichtstrahles über zwei dessen mitwirkenden Flächen bewirkt.

10. Optische Vorrichtung nach Anspruch 6, dadurch gekennzeichnet, daß die drei optischen Blöcke durch Luftspalte getrennt sind.

11. Optische Vorrichtung nach Anspruch 6 oder 10, dadurch gekennzeichnet, daß der zweite Lichtstrahl (8) zwei Spiegelungen im oberen optischen Block (13) und eine Spiegelung im unteren optischen Block (18) erfährt.

12. Optische Vorrichtung nach Anspruch 6 oder 10, dadurch gekennzeichnet, daß der zweite Lichtstrahl (8) eine Spiegelung im oberen optischen Block und zwei Spiegelungen im unteren optischen Block (9) erfährt.

13. Optische Vorrichtung nach einem beliebigen Anspruch 1 bis 12, dadurch gekennzeichnet, daß die Eintrittsfläche des oberen optischen Blockes (6, 13, 21) eine negative Neigung von etwa 10° gegenüber der Senkrechte aufweist.

14. Optische Vorrichtung nach einem beliebigen Anspruch 1 bis 13, dadurch gekennzeichnet, daß die Flächen der optischen Blöcke, die ausschließlich eine Spiegelungsfunktion übernehmen, mit einer widerspiegelnden Schicht z. B. aus Silber oder Aluminium versehen sind.

15. Optische Vorrichtung nach einem beliebigen Anspruch 1 bis 14, dadurch gekennzeichnet, daß sie mindestens mit einer dichroitischen Platte als Schutz gegen Laser-Strahlung auf dem Uebertragungsweg der beiden Lichtstrahle (3, 8) versehen ist.

0 157 676

Fig 1A          Fig 1B

Fig 2 A

Fig 2B

Fig 3

Fig 4